# FASCICULE DE BREVET EUROPEEN

(11) **EP 3 347 664 B1**
(45) Date de publication et mention de la délivrance du brevet: **26.06.2019**
(21) Numéro de dépôt: 16781497.9
(22) Date de dépôt: 09.09.2016
(51) Int. Cl.: F28D 20/02, F28F 9/013, F28F 9/16

(54) **FAISCEAU D'ÉCHANGE THERMIQUE DE STOCKAGE POUR BATTERIE THERMIQUE DE STOCKAGE COMPRENANT DES TUBES ET PROCÉDÉ DE FERMETURE DES TUBES**
SPEICHERWÄRMETAUSCHBÜNDEL FÜR WÄRMEENERGIESPEICHERBATTERIE MIT ROHREN UND VERFAHREN ZUM SCHLIESSEN DER ROHRE
STORAGE HEAT EXCHANGE BUNDLE FOR A THERMAL ENERGY STORAGE BATTERY COMPRISING TUBES, AND METHOD OF CLOSING THE TUBES

(30) Priorité: 11.09.2015 FR 1558458
(43) Date de publication de la demande: 18.07.2018
(73) Titulaire: Valeo Systemes Thermiques, 78322 Le Mesnil Saint-Denis (FR)
(72) Inventeur: AZZOUZ, Kamel, 75012 Paris (FR); BOISSELLE, Patrick, 53000 Laval (FR); BRY, Samuel, 53260 Parne Sur Roc (FR)
(74) Mandataire: Tran, Chi-Hai
(86) Numéro de dépôt international: PCT/FR2016/052267
(87) Numéro de publication internationale: WO 2017/042504

(56) Documents cités:
- WO-A1-98/34073
- US-A- 5 441 097
- US-A1- 2007 029 064
- US-A1- 2011 081 134
- US-A1- 2014 102 662

## Description

La présente invention concerne le domaine des batteries thermiques de stockage utilisant pour éléments d'échange de chaleur, un faisceau de tubes pour stocker et libérer une quantité déterminée de chaleur, les tubes contenant une substance adaptée pour stocker et libérer une quantité déterminée de chaleur, notamment un matériau à changement de phase (MCP). Ces batteries de stockage sont particulièrement adaptées pour une utilisation dans les véhicules automobile.

En particulier, l'invention concerne un faisceau d'échange thermique de stockage. Elle concerne aussi le procédé de fermeture des tubes d'un tel faisceau d'échange.

Une batterie thermique de stockage est, par exemple, utilisée pour diffuser de la chaleur, via le système de chauffage, dans l'habitacle d'un véhicule automobile hybride, c'est-à-dire combinant un moteur fonctionnant grâce à l'énergie thermique et à l'énergie électrique. Par ailleurs, ce type de batterie thermique peut servir à préchauffer un fluide caloporteur, l'huile du moteur ou l'huile de la boîte de vitesse automatique, et ce avant le démarrage à froid dudit véhicule automobile.

Lors de l'utilisation d'une batterie thermique de stockage avec un véhicule électrique, le chargement de ladite batterie thermique est, en principe, réalisé lors du chargement de la batterie électrique. La batterie électrique sert au déplacement dudit véhicule électrique. Lors de l'utilisation dudit véhicule électrique, l'énergie thermique stockée dans la batterie thermique peut être utilisée lors de la mise en marche du système de chauffage pour diffuser de la chaleur dans l'habitacle du véhicule automobile. Le système de chauffage pour chauffer l'air de l'habitacle d'un véhicule automobile fonctionne à l'aide d'un fluide tel qu'un fluide caloporteur. Afin de chauffer l'air de l'habitacle, la batterie thermique réchauffe le fluide caloporteur avant son passage à l'intérieur du radiateur de chauffage, le radiateur chauffant l'air destiné à être diffusé dans l'habitacle. L'énergie fournie par la batterie thermique permet donc d'économiser l'énergie correspondante stockée par la batterie électrique qui aurait été utilisée en l'absence d'une batterie thermique de stockage. En d'autres termes, on supprime l'impact du fonctionnement du chauffage de l'air destiné à l'habitacle sur l'autonomie du véhicule électrique.

L'utilisation d'une batterie thermique de stockage dans un véhicule hybride permet de stocker de l'énergie thermique lors du chargement de la batterie électrique. Cette batterie thermique peut être rechargée via le fluide caloporteur, lorsque le moteur du véhicule hybride est en mode de fonctionnement thermique, c'est-à-dire fonctionnant avec le moteur thermique.

Lors de l'utilisation d'une batterie thermique avec un véhicule muni d'un moteur à combustion interne, l'énergie thermique stockée à l'intérieur de la batterie thermique provient de l'énergie produite lors d'un précédent roulage dudit véhicule. Les fluides utilisés pour refroidir le moteur ou la boîte de vitesse automatique par exemple, peuvent être utilisés pour charger la batterie thermique. En effet, l'huile de la boîte de vitesse automatique rejette, dans un usage classique, une quantité déterminée de chaleur. Ladite quantité déterminée de chaleur peut être stockée dans une batterie thermique et ensuite utilisée lors du démarrage du véhicule automobile pour permettre l'augmentation rapide de la température de le chauffage de l'air de l'habitacle et / ou de l'huile de moteur et/ou de l'huile de la boîte de vitesse automatique, réduisant ainsi les frottements dus à la viscosité de ladite huile. En effet, la viscosité de l'huile est d'autant plus élevée que la température est basse. Si la température de l'huile n'augmente pas rapidement, notamment concernant l'huile de la boîte de vitesse automatique, les frottements entraînent une surconsommation de carburant et d'émissions de CO2 lors des premières minutes de l'utilisation du véhicule. La batterie thermique peut être chargée par l'énergie thermique des circuits d'huile de boîte de vitesse automatique, de fluide caloporteur ou d'huile de moteur.

Dans la conception des batteries thermiques, il est déjà connu d'utiliser des micro tubes en matériau synthétique pour encapsuler un matériau à changement de phase (MCP ou PCM en terminologie anglo-saxonne « Phase Change Material ») afin de pouvoir stocker et libérer une quantité déterminée de chaleur. Il est nécessaire de fermer les extrémités des micro-tubes de manière étanche et durable pour garantir qu'il n'y ait pas de mélange du matériau à changement de phase avec le fluide caloporteur d'échange.

Il est connu de fermer les extrémités du micro tube par soudage, collage ou par un bouchon mécanique.

Pour la plupart de ces solutions, les micro-tubes sont organisés en faisceau par des collecteurs, des grilles, des entretoises, ... permettant le maintien des micro-tubes puis sont fermés unitairement par exemple par un bouchon mécanique ou une soudure.

Parfois, la fermeture des micro-tubes s'effectue avant la mise en faisceau. Tout comme pour les solutions précédentes, la fermeture des micro-tubes est réalisée de manière unitaire.

US-A-2007029064 divulgue un faisceau d'échange thermique de stockage selon le préambule de la revendication 1.

Dans tous les cas précédemment cités, l'opération de fermeture des micro-tubes est consommatrice de temps et elle est complexe. De plus, ces solutions ne sont pas forcément très fiables, ce qui peut provoquer des défauts d'étanchéité des micro-tubes et par conséquence réduire notamment les performances thermiques de la batterie thermique.

Un des buts de la présente invention est donc de remédier au moins partiellement aux inconvénients de l'état de la technique en proposant un faisceau d'échange thermique de stockage comprenant des tubes dans lesquels est disposée une substance permettant de stocker et libérer une quantité déterminée de chaleur, ces tubes pouvant être fermés de manière étanche par une opération simple, rapide et économique d'encapsulation, qui garantit une bonne fiabilité d'étanchéité.

La présente invention concerne donc un faisceau d'échange thermique de stockage pour batterie thermique de stockage comprenant des tubes dans lesquels est disposée une substance permettant de stocker et libérer une quantité déterminée de chaleur et un collecteur maintenant lesdits tubes en leur extrémité, le collecteur comprenant les extrémités desdits tubes noyées dans un matériau apte à maintenir lesdites extrémités entre elles.

Les extrémités des tubes étant noyées dans un matériau, les tubes sont obturés au moins en partie de manière à étanchéifier le contenu des tubes (le MCP) vis-à-vis de l'environnement extérieur aux tubes.

Selon un aspect de l'invention, le collecteur comporte en outre un réceptacle comportant une grille formée sur le fond du réceptacle dans laquelle sont maintenus les tubes en leur extrémité.

Selon une caractéristique particulière, la grille comporte des trous dont le diamètre est sensiblement égal au diamètre extérieur des tubes.

Selon un autre aspect de l'invention, le collecteur est formé par un moulage dudit matériau en une structure tridimensionnelle stable.

Selon un autre aspect de l'invention, les tubes sont disposés en quinconce, les uns parallèles aux autres.

Selon un autre aspect de l'invention, le matériau est un matériau thermodurcissable dont la température de changement de phase est au moins égale à 135°C.

Selon un autre aspect de l'invention, le matériau est un matériau réticulable.

L'invention concerne également une batterie thermique comprenant un faisceau d'échange.

L'invention concerne également un procédé de fermeture de tubes de faisceau d'échange thermique de stockage pour batterie thermique de stockage comprenant des tubes remplis d'un matériau adapté pour stocker et libérer une quantité déterminée de chaleur et un réceptacle comprenant au moins une grille apte à maintenir lesdits tubes en leur extrémité, le procédé comprenant les étapes suivantes:
- une étape d'assemblage des tubes sur la grille, les extrémités des tubes étant localisées dans le réceptacle,
- une étape de remplissage du réceptacle d'un matériau de fluide durcissable de manière à recouvrir au moins une partie des extrémités des tubes,
- une étape de durcissement du matériau.

Selon un autre aspect de l'invention, toutes les extrémités des tubes sont recouvertes de matériau de fluide durcissable.

Selon un autre aspect de l'invention, la grille est formée sur le fond du réceptacle.

Selon un autre aspect de l'invention, la grille comporte des trous dont le diamètre est sensiblement égal au diamètre extérieur des tubes.

Selon un autre aspect de l'invention, la grille est constituée de deux peignes amovibles.

Selon un autre aspect de l'invention, le procédé comprend en outre une étape de positionnement de la grille approximativement au-dessus d'un niveau prédéterminé de remplissage de matériau de fluide durcissable.

Selon un autre aspect de l'invention, le procédé comprend en outre une étape de retrait de la grille.

Selon un autre aspect de l'invention, le procédé comprend en outre une étape de retrait du réceptacle.

Les but, objet et caractéristiques de la présente invention ainsi que ses avantages apparaîtront plus clairement à la lecture de la description ci-dessous, des modes de réalisation préférés faisant référence aux dessins dans lesquels :
- la figure la montre une vue, en perspective, d'un faisceau d'échange thermique de stockage selon un premier mode de réalisation de l'invention,
- la figure 1b montre une vue, en perspective, du faisceau d'échange de la figure la avant fermeture des tubes,
- la figure 2 montre une vue, en perspective, d'un faisceau d'échange thermique de stockage selon un deuxième mode de réalisation de l'invention,
- la figure 3 montre de manière schématique les différentes étapes d'un procédé de fermeture de tubes d'un faisceau d'échange thermique de stockage selon le premier mode de réalisation du faisceau d'échange,
- la figure 4 montre de manière schématique les différentes étapes d'un procédé de fermeture de tubes d'un faisceau d'échange thermique de stockage selon le deuxième mode de réalisation du faisceau d'échange,
- la figure 5 montre une vue, de dessus, d'une grille selon le procédé de fermeture de tubes d'un faisceau d'échange thermique de stockage selon le deuxième mode de réalisation du faisceau d'échange.

La description détaillée ci-après a pour but d'exposer l'invention de manière suffisamment claire et complète, notamment à l'aide d'exemples, mais ne doit en aucun cas être regardée comme limitant l'étendue de la protection aux modes de réalisation particuliers et aux exemples présentés ci-après.

Un faisceau d'échange thermique de stockage pour batterie thermique de stockage conformément à l'invention comprend une pluralité de tubes. Les tubes sont des tubes, par exemple cylindriques, en matériau synthétique, particulièrement en matériau plastique de forme longitudinale, c'est à dire que leur longueur est bien plus importante que leur diamètre. Toutefois, selon d'autres modes de réalisation, non illustrées, les tubes sont de section carrée ou ovale.

Ces tubes sont notamment des micro-tubes du fait de leurs faibles dimensions en comparaison aux dimensions habituellement rencontrées dans le domaine des véhicules automobiles. En effet, un tel micro tube a un diamètre de l'ordre de 1 à 10 millimètres et en particulier 4 millimètres, une épaisseur comprise entre 10 et 500 micromètres et une longueur comprise entre 100 et 300 millimètres.

Chacun des tubes contient une substance permettant de stocker et libérer une quantité déterminée de chaleur, par exemple un matériau à changement de phase (MCP).

Chaque tube a deux extrémités. L'extrémité est définie par la partie de terminaison du tube ainsi qu'une partie du tube précédent la terminaison du tube. Par exemple, la première extrémité d'un tube est la partie du tube s'étendant depuis une de ses deux bases jusqu'à une distance n'excédant pas 10mm et la seconde extrémité d'un tube, de manière similaire s'étend depuis la base opposée à la première jusqu'à une distance n'excédant pas 10mm.

Les tubes sont maintenus en leur extrémité par un collecteur.

Les premières extrémités des tubes sont donc maintenues par un premier collecteur. De manière analogue, les deuxièmes extrémités des tubes peuvent être maintenues par un second collecteur.

Conformément à l'invention, et tel qu'illustré en figure la et 2, les extrémités 2 desdits tubes 1 sont noyées dans un matériau 5 apte à maintenir lesdites extrémités entre elles. Les premières extrémités des tubes sont recouvertes d'un matériau qui présente une résistance thermomécanique permettant de maintenir ces premières extrémités à distance entre elles. De manière similaire, les deuxièmes extrémités des tubes peuvent être noyées dans un matériau apte à maintenir lesdites extrémités entre elles.

Les extrémités des tubes 1 noyées dans un tel matériau garantissent une fermeture simple, étanche et fiable des tubes 1.

Ainsi, le collecteur comprend les extrémités des tubes et le matériau apte à les maintenir entre elles.

Sur la figure la, un faisceau d'échange thermique de stockage 11, conformément à l'invention, est représenté selon un premier mode de réalisation.

Selon ce mode de réalisation, le faisceau d'échange thermique de stockage 11 comprend deux collecteurs 7 et des tubes 1.

Les extrémités des tubes 2 sont noyées dans un matériau 5 et ne sont donc pas visible sur la figure la.

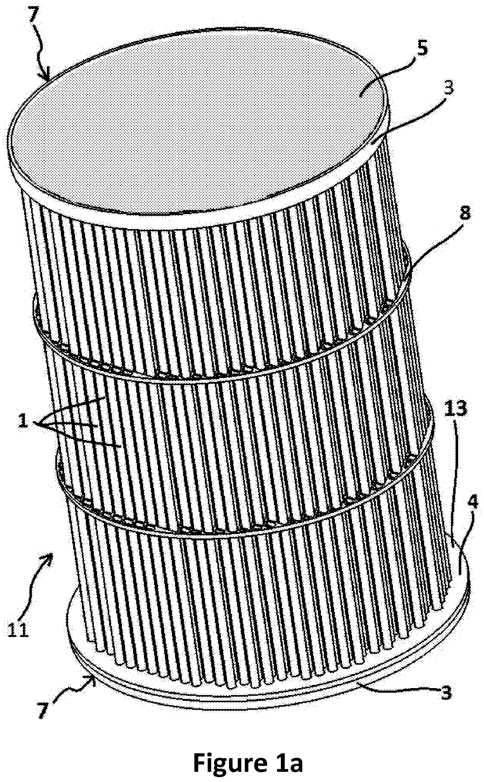

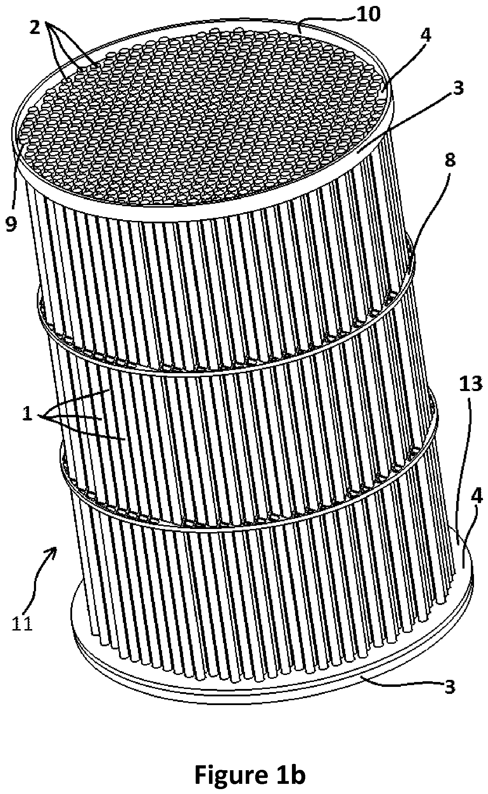

Sur la figure 1b, le matériau 5 n'est pas présent. Ainsi, les extrémités 2 des tubes 1 sont visibles.

Sur la figure la, le collecteur 7 comporte en outre un réceptacle 3 comportant une grille 4 formée sur le fond 13 du réceptacle. Sur les figures la et 1b, on voit que la grille 4 maintient les tubes 1 en leur extrémité 2.

Selon l'invention, la grille comporte des trous dont le diamètre est sensiblement égal au diamètre extérieur des tubes.

Sur la figure 1b, le réceptacle 3 est de forme cylindrique. Toutefois, d'autres formes de réceptacle peuvent être utilisées. Il comporte un fond 13 sur une de ses bases et est ouvert sur l'autre. Une grille 4 est formée sur le fond 13 du réceptacle 3. Cette grille 4 est de forme ronde, par exemple, et est percée de trous 9 disposés en quinconce.

Dans chaque trou 9 se trouve un tube 1 dont l'extrémité 2 dépasse de la grille 4 dans le réceptacle 3 par exemple d'au plus 10 millimètres.

Selon un mode de réalisation particulier, la hauteur du bord 10 du réceptacle 3 est supérieure à la hauteur des extrémités 2 se situant dans le réceptacle 3 par rapport à la grille 4. Ainsi, cela évite les coulures et bavures de matériau 5 lors de la fabrication du collecteur 7.

De même, pour éviter les bavures et coulures de matériau par les trous de la grille 4, il est avantageux que le diamètre des trous 9 soit sensiblement égal à celui du diamètre extérieur des tubes 1.

Sur les figures la et 1b, deux éléments grillagés 8 sont représentées. Ils ne sont pas indispensables mais peuvent être utiles pour maintenir les tubes à distance les uns des autres sur toute leur longueur. Avantageusement, ils peuvent être répartis régulièrement sur toute la longueur du faisceau 11. Ainsi, dans le cas représenté, les deux éléments grillagés 8 sont positionnées au premier et au deuxième tiers de la longueur du faisceau 11.

Selon un deuxième mode de réalisation de l'invention, le collecteur est formé par un moulage dudit matériau en une structure tridimensionnelle stable.

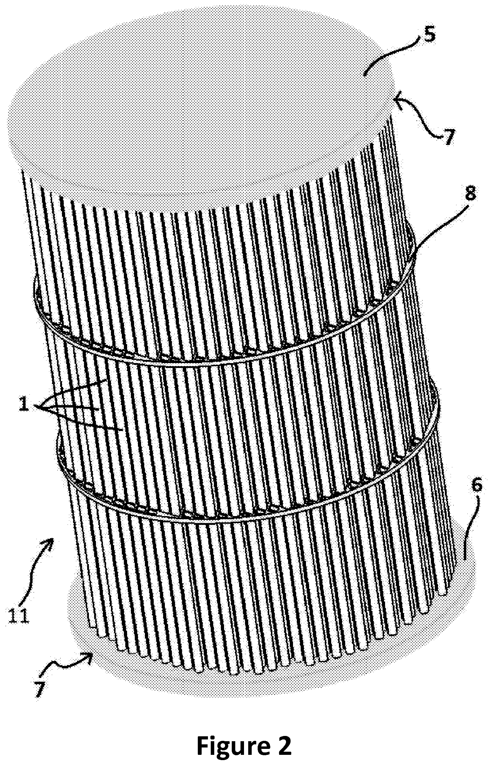

La figure 2 illustre ce mode de réalisation. Le collecteur 7 comprend les extrémités 2 des tubes 1 noyées dans un matériau 5 moulé apte à maintenir lesdites extrémités 2 entre elles. Il ne comprend pas de réceptacle 3, ni de grille 4.

Selon un exemple particulier de réalisation, deux éléments grillagés 8 sont positionnées au premier et au deuxième tiers de la longueur du faisceau 11.

Ce deuxième mode de réalisation présente des avantages par rapport au premier et notamment des gains de poids et de coût.

Pour des raisons de compacité du faisceau thermique 11, les tubes 1 sont de préférence disposés en quinconce, les uns parallèles aux autres.

Cet arrangement est visible sur la figure 1b puisque le matériau 5 n'est pas représenté. Pour obtenir cet arrangement en quinconce, les trous 9 de la grille 4 doivent être disposés en quinconce les uns par rapport aux autres.

D'autres arrangements sont possibles, par exemple selon une grille à angles droits ou selon une répartition non homogène pour favoriser le passage du fluide caloporteur selon un parcours prédéterminé.

Selon un mode de réalisation particulier, les deux collecteurs 7 sont similaires et disposés en miroir selon un plan parallèle à un des collecteurs 7 et coupant les tubes 1 en deux parties sensiblement égales. Ainsi, les tubes 1 sont parallèles les uns aux autres.

Selon l'invention, le matériau doit présenter des propriétés thermomécaniques.

Le matériau peut être un matériau thermodurcissable. Selon un exemple particulier de réalisation, sa température de changement de phase est au moins égale à 135°C. Par exemple, le matériau peut être choisi parmi les matériaux compatibles avec les liquides caloporteurs tels que ceux de la gamme de colle thermofusible (en terminologie anglo-saxonne « hot melt »), les polymères thermoplastiques, les polyéthylènes, le polyamide, les copolymères ...

Le matériau peut être un matériau réticulable. Il peut être mono-composant ou bi-composant. Par exemple, le matériau peut être choisi parmi les matériaux epoxy, polyuréthane, silicone...

Selon l'invention, un procédé possible pour fermer des tubes de faisceau d'échange thermique de stockage pour batterie thermique de stockage consiste notamment en l'utilisation d'un réceptacle, d'une grille et d'un matériau fluide durcissable.

Les étapes d'un tel procédé sont les suivantes :
- une étape d'assemblage des tubes sur la grille, les extrémités des tubes étant localisées dans le réceptacle,
- une étape de remplissage du réceptacle d'un matériau de fluide durcissable de manière à recouvrir au moins une partie des extrémités des tubes,
- une étape de durcissement du matériau.

De manière préférentielle, toutes les extrémités des tubes sont recouvertes de matériau de fluide durcissable.

Selon le premier mode de réalisation de l'invention, la grille est formée sur le fond 13 du réceptacle.

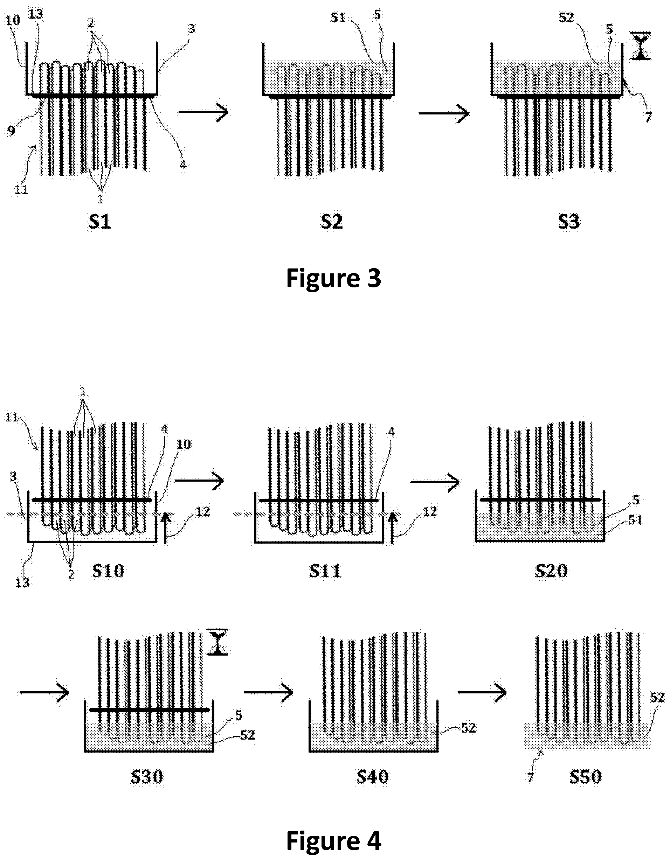

La figure 3 décrit le procédé de fermeture des tubes 1 selon le premier mode de réalisation.

Ce procédé débute par une étape d'assemblage S1 des tubes sur la grille consistant notamment à insérer des tubes 1 dans une grille 4 qui est formée sur le fond 13 d'un réceptacle 3.

Les extrémités 2 des tubes 1 dépassent de la grille 4 dans le réceptacle 3 par exemple d'au plus 10 millimètres.

De manière avantageuse, la hauteur du bord 10 du réceptacle 3 est supérieure à la hauteur des extrémités 2 se situant dans le réceptacle 3 par rapport à la grille 4.

Au cours d'une étape de remplissage S2, un matériau 5 à l'état fluide 51 est versé dans le réceptacle 3 de manière à recouvrir au moins une partie ou de préférence la totalité des extrémités 2 des tubes 1.

Une étape de durcissement S3 du matériau 5 est ensuite nécessaire. Le matériau 5 en phase solide (matériau durci 52) a une résistance thermomécanique qui lui permet de garantir un bon maintien des extrémités 2 des tubes 1 entre elles.

Le matériau 5 est un matériau fluide durcissable. Il est référencé matériau fluide 51 avant sa transformation, lorsqu'il est par exemple à l'état liquide, semi liquide, pâteux... Il est référencé matériau durci 52 après sa transformation en phase solide issue par exemple d'une polymérisation et/ ou d'une réticulation.

L'étape de durcissement S3 du matériau fluide 51 peut se produire à température ambiante, par chauffage, en présence d'humidité de l'atmosphère ambiante, par irradiation UV, électronique... C'est pendant cette étape que le matériau fluide 51 se transforme en matériau durci 52. Cette étape est représentée par un sablier sur la figure 3.

A l'étape S2 de remplissage, la grille 4 étant en contact avec le matériau fluide 51, il est avantageux que la grille 4 comporte des trous 9 dont le diamètre est sensiblement égal au diamètre extérieur des tubes 1.

De plus, il est souhaitable que tous les trous 9 de la grille 4 soient au moins en partie obturés par un tube 1.

Un exemple de réalisation de réceptacle 3 comprenant une grille 4 est représenté figure 1b.

La grille 4 est formée sur le fond 13 du réceptacle 3. Les trous 9 sont disposés en quinconce les uns par rapport aux autres.

Selon le deuxième mode de réalisation de l'invention, la grille est constituée de deux peignes amovibles.

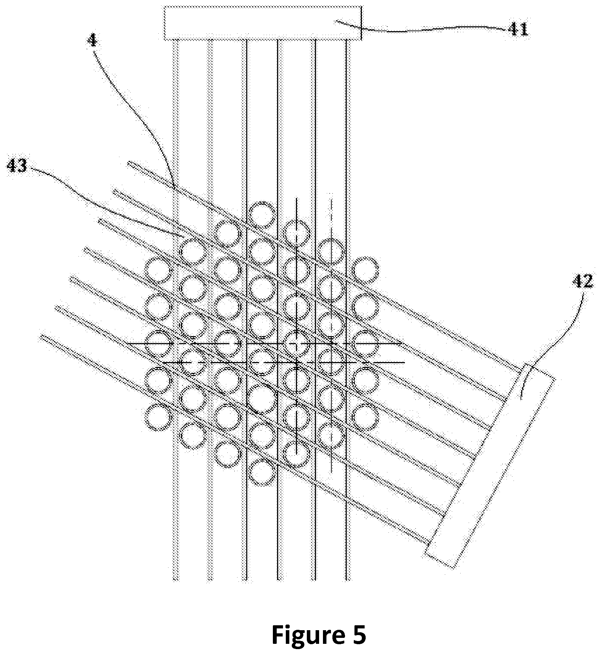

La figure 5 représente un exemple d'une telle grille.

La grille 4 comprend un peigne 41 et un peigne 42. C'est l'assemblage par croisement des deux peignes qui forme la grille 4.

Les deux peignes 41 et 42 peuvent être en contact ou à distance.

Le croisement des deux peignes 41 et 42 crée des espaces 43 par exemple en forme de losanges ou en forme de carré, prévus pour accueillir et maintenir à distance des tubes 1, par exemple selon un arrangement en quinconce ou non homogène.

L'arrangement en quinconce présente un avantage sur la compacité du faisceau 11.

Selon l'invention, le procédé comprend en outre une étape de positionnement de la grille au-dessus d'un niveau prédéterminé de remplissage de matériau de fluide durcissable.

Cela est nécessaire pour que la grille 4 ne soit pas noyée dans le matériau de fluide durcissable, cette grille devant pouvoir être retirée après durcissement du matériau.

Ainsi, un procédé de fermeture de tubes de faisceau d'échange thermique de stockage pour batterie thermique de stockage selon le deuxième mode de réalisation de l'invention est représenté de façon schématique en figure 4.

Lors de l'étape d'assemblage S10, les tubes 1 sont insérés dans une grille 4.

Le réceptacle 3 comporte un repère 12 qui correspond à un niveau prédéterminé de remplissage de matériau de fluide durcissable par rapport au fond 13 du réceptacle 3. La hauteur du bord 10 du réceptacle 3 est supérieure au repère 12.

Les extrémités 2 des tubes 1 dépassent de la grille 4 dans le réceptacle 3 de de manière à ce que la longueur des parties de tubes 1 comprise entre le fond 13 du réceptacle 3 et le niveau prédéterminé 12 de remplissage de matériau fluide soit par exemple d'au plus 10 millimètres. Selon un mode de réalisation, les extrémités 2 des tubes 1 ne sont pas en contact avec le fond 13 du réceptacle 3. Par exemple, la distance entre les extrémités 2 des tubes 1 et le fond 13 est comprise entre 1 millimètre et 9 millimètres et en particulier entre 3 millimètre et 5 millimètres.

Une étape de positionnement S11 de la grille 4 peut être nécessaire afin de s'assurer qu'elle soit localisée au dessus du niveau prédéterminé 12 de remplissage de matériau 5 de fluide durcissable.

Lors d'une étape de remplissage S20, un matériau 5 en phase fluide 51 est versé dans le réceptacle 3 au moins jusqu'au niveau prédéterminé 12 de remplissage de matériau 5 de fluide durcissable.

Ainsi, au moins une partie ou de préférence la totalité des extrémités 2 des tubes 1 sont recouvertes de fluide durcissable 5.

De manière avantageuse, si la grille 4 est constituée de deux peignes amovibles 41 et 42, elle n'est pas recouverte de fluide durcissable 5. C'est le cas représenté par la figure 4.

Si la grille 4 n'est pas amovible, elle peut être recouverte de matériau 5 de fluide durcissable ou bien ne pas l'être.

Une étape de durcissement S30 du matériau 5 est ensuite nécessaire. Le matériau 5 en phase solide (matériau durci 52) a une résistance thermomécanique qui lui permet de garantir un bon maintien des extrémités 2 des tubes 1 entre elles.

Le matériau 5 est un matériau fluide durcissable. Il est référencé matériau fluide 51 avant sa transformation, lorsqu'il est par exemple à l'état liquide, semi liquide, pâteux... Il est référencé matériau durci 52 après sa transformation en phase solide issue par exemple d'une polymérisation et/ ou d'une réticulation.

L'étape de durcissement S30 du matériau fluide 51 peut se produire à température ambiante, par chauffage, en présence d'humidité de l'atmosphère ambiante, par irradiation UV, électronique... C'est pendant cette étape que le matériau fluide 51 se transforme en matériau durci 52. Cette étape est représentée par un sablier sur la figure 4.

Si la grille 4 est amovible, l'étape de retrait de la grille S40 permet de retirer la grille 4 du faisceau 11. Le matériau durci 52 permettant de maintenir les extrémités 2 des tubes 1 entre elles, la grille 4 n'est plus nécessaire.

Ainsi, la grille peut être réutilisée au cours du procédé de fermeture des extrémités 2 opposées du faisceau 11 et/ou au cours du procédé de fermeture des extrémités d'un autre faisceau.

Il peut être également prévu, que la grille 4 ne soit pas amovible et qu'elle soit noyée dans le matériau durci 52, de sorte à renforcer de manière complémentaire le collecteur du faisceau qui comprend alors le matériau durci 52 et la grille 4.

Si la grille 4 n'est pas amovible, elle participe au maintien au pas des tubes 1 tel un élément grillagé 8 représenté sur les figures la, 1b et 2.

Une étape de retrait du réceptacle S50 permet de démouler le faisceau 11 ainsi constitué du réceptacle 3.

Ainsi, le réceptacle peut être réutilisé au cours du procédé de fermeture des extrémités 2 opposées du faisceau 11 et/ou au cours du procédé de fermeture des extrémités d'un autre faisceau.

La possibilité de réutilisation de la grille 4 amovible et du réceptacle 3 engendre une réduction des coûts sur la production de plusieurs faisceaux selon le procédé de fermeture de tubes de faisceau d'échange thermique de stockage de ce deuxième mode de réalisation de l'invention.

Le faisceau 11 final a également l'avantage d'être plus léger puisqu'il ne comprend plus la grille 4 et le réceptacle 3 à la fin du procédé.

Que ce soit dans le premier ou dans le deuxième mode de réalisation, l'espace dont dispose le fluide caloporteur pour circuler entre les tubes 1 est lié au choix de la grille 4 qui définit le pas entre les extrémités 2 des tubes 1. Cet espace de circulation de fluide doit être optimisé selon les applications pour répondre aux exigences de performance de la batterie thermique tout en proposant un dispositif compact.

L'optimisation de la grille 4 permet d'obtenir un bon compromis en termes de compacité et de performances.

L'espacement entre deux parois externes de tubes 1 adjacents est par exemple de l'ordre de 0.6 millimètre pour permettre une bonne circulation du fluide entre les tubes 1 et bénéficier d'une solution de faisceau d'échange thermique de stockage compacte. Cette valeur est valable notamment pour un tube 1 de diamètre 4 millimètres.

Cette solution apporte d'autres avantages, tels que la simplicité du procédé, sa rapidité d'exécution, son coût, la fiabilité d'étanchéité en résultant.

## Revendications

1. Faisceau d'échange thermique de stockage (11) pour batterie thermique de stockage comprenant des tubes (1) dans lesquels est disposée une substance permettant de stocker et libérer une quantité déterminée de chaleur et un collecteur (7) maintenant lesdits tubes en leur extrémité **caractérisé en ce que** le collecteur (7) comprend les extrémités (2) desdits tubes (1) noyées dans un matériau (5) apte à maintenir lesdites extrémités (2) entre elles.

2. Faisceau d'échange thermique de stockage (11) selon la revendication 1 **caractérisé en ce que** le collecteur (7) comporte en outre un réceptacle (3) comportant une grille (4) formée sur le fond (13) du réceptacle (3) dans laquelle sont maintenus les tubes (1) en leur extrémité (2).

3. Faisceau d'échange thermique de stockage (11) selon la revendication 2 **caractérisé en ce que** la grille (4) comporte des trous (9) dont le diamètre est sensiblement égal au diamètre extérieur des tubes.

4. Faisceau d'échange thermique de stockage (11) selon l'une quelconque des revendications 1 à 3, **caractérisé en ce que** le collecteur (7) est formé par un moulage dudit matériau (5) en une structure tridimensionnelle stable.

5. Faisceau d'échange thermique de stockage (11) selon l'une quelconque des revendications précédentes, **caractérisé en ce que** les tubes (1) sont disposés en quinconce, les uns parallèles aux autres.

6. Faisceau d'échange thermique de stockage (11) selon l'une quelconque des revendications précédentes, **caractérisé en ce que** le matériau (5) est un matériau thermodurcissable dont la température de changement de phase est au moins égale à 135°C.

7. Faisceau d'échange thermique de stockage (11) selon l'une quelconque des revendications précédentes, **caractérisé en ce que** le matériau (5) est un matériau réticulable.

8. Batterie thermique comprenant un faisceau d'échange (11) selon l'une quelconque des revendications précédentes.

9. Procédé de fermeture de tubes de faisceau d'échange thermique de stockage pour batterie thermique de stockage comprenant des tubes (1) remplis d'un matériau adapté pour stocker et libérer une quantité déterminée de chaleur et un réceptacle (3) comprenant au moins une grille (4) apte à maintenir lesdits tubes (1) en leur extrémité (2), le procédé comprenant les étapes suivantes:
- une étape d'assemblage (S1, S10) des tubes (1) sur la grille (4), les extrémités (2) des tubes (1) étant localisées dans le réceptacle (3),
- une étape de remplissage (S2, S20) du réceptacle d'un matériau (5) de fluide durcissable de manière à recouvrir au moins une partie des extrémités (2) des tubes (1),
- une étape de durcissement (S3, S30) du matériau.

10. Procédé de fermeture de tubes selon la revendication 9 **caractérisé en ce que** toutes les extrémités (2) des tubes (1) sont recouvertes de matériau (5) de fluide durcissable.

11. Procédé de fermeture de tubes selon l'une quelconque des revendications 9 ou 10 **caractérisé en ce que** la grille (4) est formée sur le fond (13) du réceptacle (3).

12. Procédé de fermeture de tubes selon l'une quelconque des revendications 9 à 11 **caractérisé en ce que** la grille (4) comporte des trous (9) dont le diamètre est sensiblement égal au diamètre extérieur des tubes (1).

13. Procédé de fermeture de tubes selon l'une quelconque des revendications 9 ou 10 **caractérisé en ce que** la grille (4) est constituée de deux peignes amovibles (41, 42).

14. Procédé de fermeture de tubes selon l'une quelconque des revendications 9, 10 ou 13 **caractérisé en ce que** le procédé comprend en outre une étape de positionnement de la grille (S11) au dessus d'un niveau prédéterminé (12) de remplissage de matériau (5) de fluide durcissable.

15. Procédé de fermeture de tubes selon la revendication 14 **caractérisé en ce que** le procédé comprend en outre une étape de retrait de la grille (S40).

16. Procédé de fermeture de tubes selon l'une quelconque des revendications 9 à 10 ou 13 à 15 **caractérisé en ce que** le procédé comprend en outre une étape de retrait du réceptacle (S50).

17. Procédé de fermeture de tubes selon l'une quelconque des revendications 9 à 16, **caractérisé en ce que** le matériau (5) est un matériau thermodurcissable dont la température de changement de phase est au moins égale à 135°C.

18. Procédé de fermeture de tubes selon l'une quelconque des revendications 9 à 17, **caractérisé en ce que** le matériau (5) est un matériau réticulable.

## Patentansprüche

1. Speicher-Wärmeaustauschbündel (11) für eine Wärmespeicherbatterie umfassend Rohre (1), in denen eine Substanz angeordnet ist, die es gestattet, eine bestimmte Menge an Wärme zu speichern und abzugeben, und einen Endboden (7), der die Rohre an ihrem Ende hält, **dadurch gekennzeichnet, dass** der Endboden (7) die Enden (2) der Rohre (1) umfasst, die in einem Material (5) eingebettet sind, das geeignet ist, die Enden (2) untereinander zu halten.

2. Speicher-Wärmeaustauschbündel (11) nach Anspruch 1, **dadurch gekennzeichnet, dass** der Endboden (7) ferner eine Aufnahme (3) aufweist, die ein Gitter (4) aufweist, das auf dem Boden (13) der Aufnahme (3) ausgebildet ist, in dem die Rohre (1) an ihrem Ende (2) gehalten werden.

3. Speicher-Wärmeaustauschbündel (11) nach Anspruch 2, **dadurch gekennzeichnet, dass** das Gitter (4) Löcher (9) aufweist, deren Durchmesser im Wesentlichen gleich dem Außendurchmesser der Rohre ist.

4. Speicher-Wärmeaustauschbündel (11) nach einem der Ansprüche 1 bis 3, **dadurch gekennzeichnet, dass** der Endboden (7) durch eine Formung des Materials (5) in eine stabile dreidimensionale Struktur gebildet ist.

5. Speicher-Wärmeaustauschbündel (11) nach einem der vorhergehenden Ansprüche, **dadurch gekennzeichnet, dass** die Rohre (1) gestaffelt angeordnet sind, wobei sie zueinander parallel sind.

6. Speicher-Wärmeaustauschbündel (11) nach einem der vorhergehenden Ansprüche, **dadurch gekennzeichnet, dass** das Material (5) ein wärmehärtendes Material ist, dessen Phasenumwandlungstemperatur mindestens gleich 135 °C ist.

7. Speicher-Wärmeaustauschbündel (11) nach einem der vorhergehenden Ansprüche, **dadurch gekennzeichnet, dass** das Material (5) ein vernetzbares Material ist.

8. Wärmebatterie umfassend ein Austauschbündel (11) nach einem der vorhergehenden Ansprüche.

9. Verfahren zum Verschließen von Rohren eines Speicher-Wärmeaustauschbündels für eine Wärmespeicherbatterie umfassend Rohre (1), die mit einem Material gefüllt sind, das geeignet ist, eine bestimmte Menge an Wärme zu speichern und abzugeben, und eine Aufnahme (3) umfassend mindestens ein Gitter (4), das geeignet ist, die Rohre (1) an ihrem Ende (2) zu halten, das Verfahren umfassend die folgenden Schritte:
- einen Schritt des Montierens (S1, S10) der Rohre (1) auf dem Gitter (4), wobei sich die Enden (2) der Rohre (1) in der Aufnahme (3) befinden,
- einen Schritt des Füllens (S2, S20) der Aufnahme mit einem Material (5) aus härtbarem Fluid, um mindestens einen Abschnitt der Enden (2) der Rohre (1) zu bedecken,
- einen Schritt des Härtens (S3, S30) des Materials.

10. Verfahren zum Verschließen von Rohren nach Anspruch 9, **dadurch gekennzeichnet, dass** alle Enden (2) der Rohre (1) von Material (5) aus härtbarem Fluid bedeckt sind.

11. Verfahren zum Verschließen von Rohren nach Anspruch 9 oder 10, **dadurch gekennzeichnet, dass** das Gitter (4) auf dem Boden (13) der Aufnahme (3) ausgebildet ist.

12. Verfahren zum Verschließen von Rohren nach einem der Ansprüche 9 bis 11, **dadurch gekennzeichnet, dass** das Gitter (4) Löcher (9) aufweist, deren Durchmesser im Wesentlichen gleich dem Außendurchmesser der Rohre (1) ist.

13. Verfahren zum Verschließen von Rohren nach Anspruch 9 oder 10, **dadurch gekennzeichnet, dass** das Gitter (4) von zwei abnehmbaren Kämmen (41, 42) gebildet ist.

14. Verfahren zum Verschließen von Rohren nach einem der Ansprüche 9, 10 oder 13, **dadurch gekennzeichnet, dass** das Verfahren ferner einen Schritt des Positionierens des Gitters (S11) über einem vorbestimmten Füllstand (12) des Materials (5) aus härtbarem Fluid umfasst.

15. Verfahren zum Verschließen von Rohren nach Anspruch 14, **dadurch gekennzeichnet, dass** das Verfahren ferner einen Schritt des Entfernens des Gitters (S40) umfasst.

16. Verfahren zum Verschließen von Rohren nach einem der Ansprüche 9 bis 10 oder 13 bis 15, **dadurch gekennzeichnet, dass** das Verfahren ferner einen Schritt des Entfernens der Aufnahme (S50) umfasst.

17. Verfahren zum Verschließen von Rohren nach einem der Ansprüche 9 bis 16, **dadurch gekennzeichnet, dass** das Material (5) ein wärmehärtendes Material ist, dessen Phasenumwandlungstemperatur mindestens gleich 135 °C ist.

18. Verfahren zum Verschließen von Rohren nach einem der Ansprüche 9 bis 17, **dadurch gekennzeichnet, dass** das Material (5) ein vernetzbares Material ist.

## Claims

1. Storage heat exchange core bundle (11) for a thermal energy storage battery comprising tubes (1) in which there is a substance allowing a determined quantity of heat to be stored and released, and a header (7) holding said tubes at their end, **characterized in that** the header (7) comprises the ends (2) of said tubes (1) embedded in a material (5) capable of holding said ends (2) relative to one another.

2. Storage heat exchange core bundle (11) according to Claim 1, **characterized in that** the header (7) further comprises a receptacle (3) comprising a grating (4) formed on the closed end (13) of the receptacle (3) in which the tubes (1) are held at their ends (2).

3. Storage heat exchange core bundle (11) according to Claim 2, **characterized in that** the grating (4) comprises holes (9) the diameter of which is substantially equal to the outside diameter of the tubes.

4. Storage heat exchange core bundle (11) according to any one of Claims 1 to 3, **characterized in that** the header (7) is formed of a moulding of said material (5) into a stable three-dimensional structure.

5. Storage heat exchange core bundle (11) according to any one of the preceding claims, **characterized in that** the tubes (1) are arranged in a staggered configuration, parallel to one another.

6. Storage heat exchange core bundle (11) according to any one of the preceding claims, **characterized in that** the material (5) is a thermosetting material the phase change temperature of which is at least equal to 135°C.

7. Storage heat exchange core bundle (11) according to any one of the preceding claims, **characterized in that** the material (5) is a cross linkable material.

8. Thermal battery comprising an exchange core bundle (11) according to any one of the preceding claims.

9. Method for closing storage heat exchange core bundle tubes for a thermal energy storage battery comprising tubes (1) filled with a material suited to storing and releasing a determined quantity of heat and a receptacle (3) comprising at least one grating (4) able to hold said tubes (1) at their end (2), the method comprising the following steps:
- a step (S1, S10) of assembling the tubes (1) on the grating (4), the ends (2) of the tubes (1) being located in the receptacle (3),
- a step (S2, S20) of filling the receptacle with a curable fluid material (5) so as to cover at least part of the ends (2) of the tubes (1),
- a step (S3, S30) of curing the material.

10. Method for closing tubes according to Claim 9, **characterized in that** all the ends (2) of the tubes (1) are covered with curable fluid material (5).

11. Method for closing tubes according to either one of Claims 9 and 10, **characterized in that** the grating (4) is formed on the closed end (13) of the receptacle (3).

12. Method for closing tubes according to any one of Claims 9 to 11, **characterized in that** the grating (4) comprises holes (9) the diameter of which is substantially equal to the outside diameter of the tubes (1) .

13. Method for closing tubes according to either one of Claims 9 and 10, **characterized in that** the grating (4) is made up of two removal combs (41, 42).

14. Method for closing tubes according to any one of Claims 9, 10 and 13, **characterized in that** the method further comprises a step (S11) of positioning the grating above a predetermined level (12) of filling with curable material. (5).

15. Method for closing tubes according to Claim 14, **characterized in that** the method further comprises a step (S40) of removing the grating.

16. Method for closing tubes according to any one of Claims 9 to 10 or 13 to 15, **characterized in that** the method further comprises a step (S50) of removing the receptacle.

17. Method for closing tubes according to any one of Claims 9 to 16, **characterized in that** the material (5) is a thermosetting material the phase change temperature of which is at least equal to 135°C.

18. Method for closing tubes according to any one of Claims 9 to 17, **characterized in that** the material (5) is a cross linkable material.
